# EUROPÄISCHE PATENTSCHRIFT

(11) **EP 2 764 595 B1**
(45) Veröffentlichungstag und Bekanntmachung des Hinweises auf die Patenterteilung: **28.10.2015**
(21) Anmeldenummer: 12787732.2
(22) Anmeldetag: 16.11.2012
(51) Int. Cl.: H02H 7/122, H02H 7/12, H02M 7/49

(54) **VERFAHREN ZUM SCHÜTZEN EINES ZWISCHENKREISKONDENSATORS IN EINER STROMRICHTERSCHALTUNG**
METHOD FOR PROTECTING AN INTERMEDIATE CIRCUIT CAPACITOR IN A POWER CONVERTER CIRCUIT
PROCÉDÉ DE PROTECTION D'UN CONDENSATEUR DE CIRCUIT INTERMÉDIAIRE DANS UN CIRCUIT DE CONVERSION DE COURANT

(30) Priorität: 19.12.2011 EP 11194195
(43) Veröffentlichungstag der Anmeldung: 13.08.2014
(73) Patentinhaber: Siemens Aktiengesellschaft, 80333 München (DE)
(72) Erfinder: VÖLKEL, Stefan, 91058 Erlangen (DE)
(86) Internationale Anmeldenummer: PCT/EP2012/072857
(87) Internationale Veröffentlichungsnummer: WO 2013/092045

(56) Entgegenhaltungen:
- EP-A1- 2 369 725
- LAMBERTZ L ET AL: "Modular converter systems for vehicle applications", EMOBILITY - ELECTRICAL POWER TRAIN, 2010, IEEE, PISCATAWAY, NJ, USA, 8. November 2010 (2010-11-08), Seiten 1-6, XP031835669, ISBN: 978-1-4244-8410-2 in der Anmeldung erwähnt

## Beschreibung

Die Erfindung betrifft ein Verfahren gemäß dem Oberbegriff des Anspruchs 1, eine Steuervorrichtung zur Durchführung des Verfahrens, eine Stromrichterschaltung mit der Steuervorrichtung und einen Elektromotor mit der Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

In der EP 2 369 725 A1 ist eine Überbrückungseinheit mit einem bistabilen Relais für in Reihe geschaltete Umrichterzellen offenbart. Mittels des Relais werden im Falle eines Überstroms und/oder einer Überspannung, aber auch falls ein externes Schließsignal vorliegt, die Eingänge der jeweiligen Umrichterzelle kurzgeschlossen und somit ein niederohmiger Leitungspfad zur Überbrückung der Umrichterzelle bereitgestellt. In diesem Fall fließt ein an den Eingängen anliegender elektrischer Strom über die Überbrückungseinheit und nicht durch andere bauliche Komponenten der Umrichterzelle. Parallel zu dem Relais kann ein Halbleiterschalter geschaltet sein, um die Reaktionszeit der Überbrückungseinheit zu verkürzen.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, am Ausgang eines Submoduls einer Stromrichterschaltung der eingangs genannten Art im Fehlerfall einen Leistungsfluss zu unterbinden.

Der Erfindung liegt die Überlegung zugrunde, dass eine Stromrichterschaltung eine elektrische Leistung aus einer elektrischen Leistungsquelle mit einer Hauptleistungsflussrichtung aufnimmt. Die Erfindung erkennt jedoch, dass sich in den einzelnen Submodulen der Stromrichterschaltung diese Hauptleistungsflussrichtung nicht ohne weiteres umkehren lässt. Die Spannung aus der elektrischen Leistungsquelle ist vorgegeben und fällt an den Submodulen daher mit einem definierten Vorzeichen ab. Zum Einstellen einer bestimmten aufzunehmenden Leistung von einem an die Stromrichterschaltung angeschlossenen elektrischen Verbraucher kann ein entsprechender Regelkreis daher nur den Strom aus der Leistungsquelle regeln. Da der Strom aus der elektrischen Leistungsquelle jedoch durch alle Submodule der Stromrichterschaltung aufgrund ihrer Verschaltung in Reihe gleichermaßen fließt, kann die Richtung des Stromes und damit die individuelle Leistungsflussrichtung durch jedes Submodul nicht beliebig eingestellt werden. Wenn jedoch in einem Fehlerfall eine erste Last an einem ersten Submodul elektrische Leistung aufnimmt und gleichzeitig eine zweite Last an einem zweiten Submodul elektrische Leistung abgibt, muss in einem der beiden Submodule elektrische Leistung zwischengespeichert werden, da einem der beiden Submodule Leistung von beiden Seiten - Eingang und Ausgang - elektrische Leistung zugeführt wird.

Der Erfindung liegt ferner die Überlegung zugrunde, dass diese Zwischenspeicherung begrenzt möglich und abhängig von der Kapazität des Zwischenkreiskondensators in dem Submodul ist. Um Bauraum und Kosten zu sparen sollte die Kapazität des Zwischenkreiskondensators so klein wie möglich dimensioniert sein. Dies steht jedoch im Widerspruch zu dem oben genannten Problem, dass im Fehlerfall Leistung in einem der Submodule zwischengespeichert werden muss, wenn einem Eingang und einem Ausgang des Submoduls elektrische Leistung zugeführt wird.

Die Erfindung schlägt daher vor, im Fehlerfall einen elektrischen Leistungsfluss von der elektrischen Last aus in das fehlerhafte Submodul hinein zu unterbinden.

Die Erfindung gibt daher ein Verfahren zum Schützen eines Zwischenkreiskondensators in einer Stromrichterschaltung mit wenigstens zwei Submodulen in Reihenschaltung, die über eine Induktivität elektrische Leistung aus einer eine Gleichspannung abgebenden Leistungsquelle bezieht an, wobei jedes Submodul eingangsseitig eine einphasige Halbbrücke und lastseitig eine einphasige Vollbrücke aufweist, und wobei die Halbbrücke, die Vollbrücke und ein Zwischenkreiskondensator gleichspannungsseitig miteinander parallel verschaltet sind. Erfindungsgemäß umfasst das Verfahren die Schritte Erfassen eines Fehlers in einem der Submodule und Blockieren einer elektrischen Leistungsübertragung vom lastseitigen Ausgang der Vollbrücke des Submoduls mit dem erfassten Fehler in das Submodul mit dem erfassten Fehler. Die Vollbrücke ist alternativ mehrphasig, wenn beispielsweise ein entsprechend mehrphasiger Verbraucher an das Submodul angeschlossen werden soll. So kann die Vollbrücke beispielsweise dreiphasig sein, wenn als Last ein gewöhnlicher Asynchronmotor angeschlossen ist.

Durch das angegebene Verfahren kann verhindert werden, dass in einem Submodul einer Stromrichterschaltung im Fehlerfall, wenn dem Submodul über einen Eingang und einen Ausgang gleichzeitig elektrische Leistung zugeführt wird, einem Zwischenkreiskondensator im Submodul zu viel elektrische Energie zugeführt wird. Dadurch können nicht nur Kosten und Bauraum für das Submodul und damit der Stromrichterschaltung gespart werden, ein zu hohes Aufladen des Zwischenkreiskondensators und eine damit verbundene eventuelle Zerstörung des Zwischenkreiskondensators können ebenfalls vermieden werden, wodurch schwere physikalische Schäden an der Stromrichterschaltung im Fehlerfall ebenfalls vermieden werden können.

In einer Weiterbildung der Erfindung umfasst das angegebene Verfahren den Schritt Unterbrechen der elektrischen Verbindung zwischen einem lastseitigen Ausgang der Vollbrücke des fehlerhaften Submoduls und dem Zwischenkreiskondensator des fehlerhaften Submoduls zum Trennen des lastseitigen Ausgangs der Vollbrücke des fehlerhaften Submoduls vom Zwischenkreiskondensator des fehlerhaften Submoduls. Durch die Unterbrechung wird eine elektrische Energieabgabe an eine an das fehlerhafte Submodul angeschlossene elektrische Last unterbunden, so dass im Fehlerfall auch keine elektrische Energie mehr von der elektrischen Last in das fehlerhafte Submodul hinein abgegeben werden kann. Auf diese Weise wird ein unkontrolliertes Einspeisen von Strömen aus der elektrischen Last in die Vollbrücke des fehlerhaften Submoduls vermieden. Diese Ströme könnten über Freilaufdioden der Vollbrücke des fehlerhaften Submoduls gleichgerichtet werden und den Zwischenkreiskondensator des fehlerhaften Submoduls unkontrolliert aufladen.

Besonders bevorzugt erfolgt die Unterbrechung der elektrischen Verbindung zwischen einem lastseitigen Ausgang der Vollbrücke des fehlerhaften Submoduls und dem Zwischenkreiskondensator des fehlerhaften Submoduls über einen im lastseitigen Ausgang der Vollbrücke des fehlerhaften Submoduls angeordneten Schalter, der in Reihe zu einer an das fehlerhafte Modul angeschlossenen elektrischen Last schaltbar ist, so dass die Blockade der elektrischen Leistungsübertragung in das fehlerhafte Submodul hinein mit einem redundanten Schaltelement gesichert werden kann.

In einer zusätzlichen Weiterbildung der Erfindung umfasst das angegebene Verfahren den Schritt Kurzschließen des lastseitigen Ausgangs der Vollbrücke des fehlerhaften Submoduls zum Trennen des lastseitigen Ausgangs der Vollbrücke des fehlerhaften Submoduls vom Zwischenkreiskondensator des fehlerhaften Submoduls. Durch den Kurzschluss des lastseitigen Ausgangs wird ein zusätzlicher Strompfad zwischen den Klemmen der an das fehlerhafte Submodul angeschlossenen elektrischen Last eingeführt. Dieser Strompfad liegt parallel zum Zwischenkreiskondensator des fehlerhaften Submoduls. Je niederohmiger der Strompfad ist, desto mehr Strom wird aus der angeschlossenen elektrischen Last über diesen Strompfad am Zwischenkreiskondensator des fehlerhaften Submoduls vorbeigeführt, so dass eine Aufladung des Zwischenkreiskondensators des fehlerhaften Submoduls durch diesen Strom vermieden wird. In einer bevorzugten Weiterbildung der Erfindung umfasst das angegebene Verfahren zum Kurzschließen des lastseitigen Ausgangs der Vollbrücke des fehlerhaften Submoduls den Schritt Schließen zweier den Ausgang mit dem Zwischenkreiskondensator verbindenden Schalter der Vollbrücke des fehlerhaften Submoduls. Damit wird der Kurzschluss über die Brückenarme der Vollbrücke des fehlerhaften Submoduls geführt, so dass das fehlerhafte Submodul der Stromrichterschaltung der eingangs genannten Art zur Durchführung des angegebenen Verfahrens schaltungstechnisch nicht weiter verändert werden muss.

In einer besonders bevorzugten Weiterbildung der Erfindung umfasst das angegebene Verfahren den Schritt Schließen eines parallel zum lastseitigen Ausgang der Vollbrücke des fehlerhaften Submoduls geschalteten Schalters beim Kurzschließen des lastseitigen Ausgangs der Vollbrücke des fehlerhaften Submoduls. Zwar könnte ein Kurzschluss des lastseitigen Ausgangs der Vollbrücke des fehlerhaften Submoduls wie bereits erwähnt auch über die Brückenarme innerhalb der Vollbrücke umgesetzt werden, liegt die Fehlerursache, die zur Blockade der elektrischen Leistungsübertragung führt jedoch in der Vollbrücke selbst, könnte gegebenenfalls ein Kurzschluss nicht mehr möglich sein. Dieses Problem wird durch das Schließen des redundanten parallel zum lastseitigen Ausgang der Vollbrücke geschalteten Schalters vermieden.

In einer anderen Weiterbildung der Erfindung umfasst das angegebene Verfahren den Schritt Trennen eines Eingangs des fehlerhaften Submoduls vom Zwischenkreiskondensator des fehlerhaften Submoduls. Auf diese Weise wird eine Aufladung des Zwischenkreiskondensators des fehlerhaften Submoduls aufgrund eines eingangsseitigen Leistungsflusses vermieden, der aufgrund der Leistungsflussblockade am lastseitigen Ausgang der Vollbrücke das fehlerhafte Submodul nicht mehr verlassen kann. Die Trennung des Eingangs des fehlerhaften Submoduls vom Zwischenkreiskondensator des fehlerhaften Submoduls kann mit den gleichen Verfahrensschritten durchgeführt werden, die auch zur Blockade der elektrischen Leistungsübertragung vom lastseitigen Ausgang der Vollbrücke des fehlerhaften Submoduls in das fehlerhafte Submodul hinein angegeben wurden.

In einer besonders bevorzugten Weiterbildung der Erfindung umfasst das Verfahren Kurzschließen des Eingangs des Submoduls zum Trennen des Eingangs des fehlerhaften Submoduls und dem Zwischenkreiskondensator des fehlerhaften Submoduls. Durch das Kurzschließen des Eingangs des fehlerhaften Submoduls wird nicht nur wirksam eine elektrische Leistungszufuhr im Fehlerfall in das Submodul hinein unterbunden, gleichzeitig wird das fehlerhafte Submodul in der oben genannten Reihenschaltung aus den mehreren Submodulen der Stromrichterschaltung der eingangs genannten Art auch überbrückt, so dass ein Ausfall des fehlerhaften Submoduls nicht zu einem Gesamtausfall der Stromrichterschaltung führt.

In einer noch anderen Weiterbildung der Erfindung umfasst das angegebene Verfahren den Schritt Erfassen des Fehlers im Submodul, wenn eine am Zwischenkreiskondensator des fehlerhaften Submoduls abfallende Spannung einen vorbestimmten Wert überschreitet. Durch die Gegenüberstellung der Zwischenkreiskondensatorspannung mit dem vorbestimmten Wert lässt sich der Fehler im Submodul ohne weiteres erkennen, da ein fehlerhafter Leistungsfluss durch das Submodul unmittelbar aus der Höhe der Zwischenkreiskondensatorspannung erkennbar ist. Um gegebenenfalls eine Reserve zur Reaktion auf den Fehler vorzusehen sollte der vorbestimmte Wert nicht auf die maximal an den Zwischenkreiskondensator anlegbare Spannung sondern auf einen ausreichend niedrigeren Wert darunter festgelegt werden, damit eine eventuelle Zeitverzögerung zwischen dem Erkennen des Fehlers und der oben genannten Blockade der elektrischen Leistungsübertragung vom lastseitigen Ausgang der Vollbrücke des fehlerhaften Submoduls in das fehlerhafte Submodul hinein nicht zu Schäden am Zwischenkreiskondensator des fehlerhaften und/oder anderen Elementen im fehlerhaften Submodul führt.

Die Erfindung gibt auch eine Steuervorrichtung an, die zur Durchführung des angegebenen Verfahrens eingerichtet ist.

In einer besonders bevorzugten Weiterbildung der Erfindung weist die Steuervorrichtung einen Speicher und einen Prozessor auf. Dabei ist das Verfahren in Form eines Computerprogramms in dem Speicher hinterlegt und der Prozessor zur Ausführung des angegebenen Verfahrens eingerichtet, wenn das Computerprogramm aus dem Speicher in den Prozessor geladen ist.

Die Erfindung gibt auch eine Stromrichterschaltung an, die wenigstens zwei Submodule in Reihenschaltung umfasst, die über eine Induktivität elektrische Leistung aus einer eine Gleichspannung abgebenden Leistungsquelle bezieht. Dabei weist jedes Submodul eingangsseitig eine einphasige Halbbrücke und lastseitig eine, insbesondere einphasige, Vollbrücke auf. Die Halbbrücke, die Vollbrücke und ein Zwischenkreiskondensator sind gleichspannungsseitig miteinander parallel verschaltet. Die angegebene Stromrichterschaltung umfasst eine angegebene Steuervorrichtung.

In einer Weiterbildung umfasst die Stromrichterschaltung einen Schalter in jedem Submodul, der am lastseitigen Ausgang der Vollbrücke in Reihe zur Vollbrücke geschalten ist.

In einer alternativen oder zusätzlichen Weiterbildung umfasst die Stromrichterschaltung einen Schalter in jedem Submodul, der am lastseitigen Ausgang der Vollbrücke parallel zur Vollbrücke geschalten ist.

Die Erfindung gibt auch ein Fahrzeug an, dass eine Batterie zum Abgeben einer elektrischen Leistung zum Antreiben des Fahrzeugs, einen angegebenen modularen Umrichter und einen Elektromotor mit einer Anzahl der Anzahl der Submodule entsprechenden Motorwicklungen umfasst, wobei jede Motorwicklung an eines der Submodule als elektrische Last angeschlossen ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG 1: eine Schaltung mit einem beispielhaften modularen Umrichter, und
- FIG 2: ein beispielhaftes Submodul des modularen Umrichters zeigen.

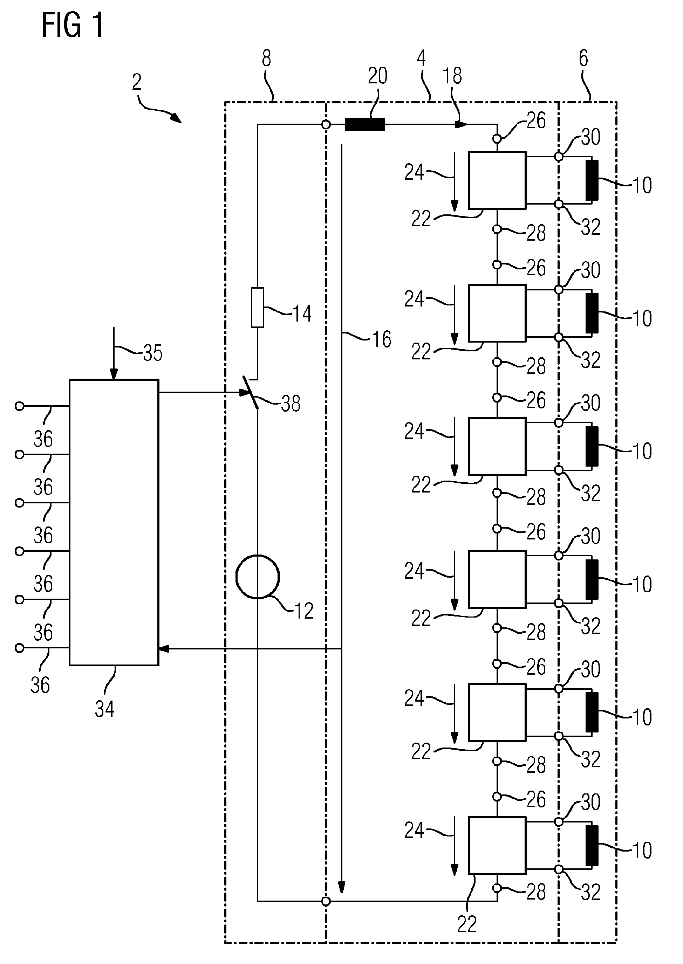

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist sechs elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab.

Die Stromrichterschaltung 4 weist eingangsseitig eine Induktivität 20 auf, die beispielsweise eine Spule sein kann. An diese Induktivität 20 schließt sich in Reihe eine Reihenschaltung aus sechs noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die Lasten 10 mit elektrischer Energie in einer noch zu beschreibenden Weise. Für die Anzahl der Submodule 22 und elektrischen Lasten 10 wurde in der vorliegenden Ausführung sechs gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die Lasten 10 angeschlossen.

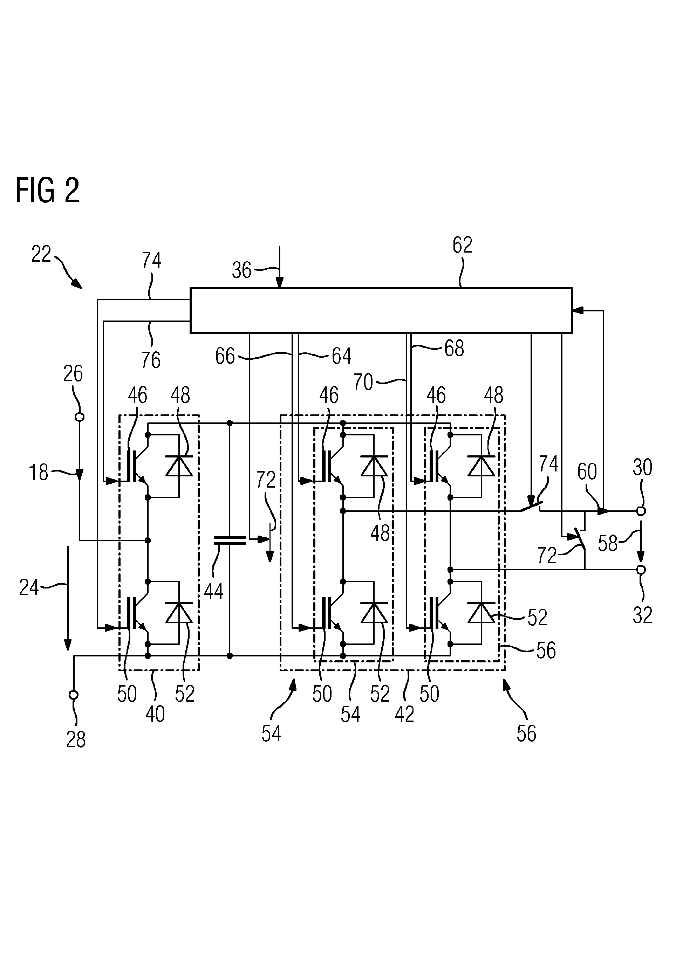

Die Schaltung 2 besitzt ferner ein übergeordnetes Steuergerät, nachstehend Master 34 genannt, das die Erzeugung des Drehfeldes mit den als Motorwicklungen ausgebildeten elektrischen Lasten 10 im als Elektromotor ausgebildeten elektrischen Verbraucher 6 steuert. Dazu kann der Master 34 eine Drehzahl 35 des als Elektromotor ausgebildeten elektrischen Verbrauchers 6 empfangen und basierend auf Stellsignalen 36 die einzelnen Submodule 22 ansteuern. Basierend auf den Stellsignalen 36 stellen die einzelnen Submodule 22 einen in FIG 2 gezeigten elektrischen Strom 60 durch die als Motorwicklungen ausgebildeten elektrischen Lasten 10 ein, um mit den Motorwicklungen das Drehfeld zu erzeugen.

Der Master 34 ist ferner vorgesehen, die Batteriespannung 16 zu erfassen. Anhand der Batteriespannung 16 überprüft der Master 34 die Schaltung 2 auf Fehler hin. Ist die Batteriespannung 16 beispielsweise zu gering, ist dies ein Anzeichen für einen Kurzschluss. Im Fehlerfalle überführt der Master 34 die Schaltung 2 in einen sicheren Zustand, indem er einen Schalter 38 öffnet, der beispielsweise intern in der Batterie 8 angeordnet sein kann.

Es wird auf FIG 2 Bezug genommen, die beispielhaft den Aufbau eines der Submodule 22 in der Stromrichterschaltung 4 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 40, eine Vollbrücke 42 und einen Zwischenkreiskondensator 44 auf, die miteinander parallel verschaltet sind.

Die Eingangshalbbrücke 40 weist einen ersten Schalter 46 und eine dazu parallel geschaltete erste Freilaufdiode 48 sowie einen dazu in Reihe geschalteten zweiten Schalter 50 und eine dazu antiparallel geschaltete zweite Freilaufdiode 52 auf. Die Schalter können als Leistungshalbleiterschalter, wie beispielsweise MOSFETs (Metalloxid-Feldeffekttransistor) ausgebildet sein. Abhängig von der Art des Leistungshalbleiterschalters können die Freilaufdioden 48, 52 auch weggelassen werden.

Die erste Teilspannung 24 ist an den zweiten Schalter 50 angelegt, während der erste Schalter 46 in Reihe zwischen dem zweiten Schalter 50 und der Vollbrücke 42 geschaltet ist. Somit kann der zweite Schalter 50 aus Sicht der Vollbrücke 42 den Eingang aus der Batterie 8 kurzschließen, während der erste Schalter 46 (bei geöffneten zweiten Schalter 50) die Vollbrücke 42 in den Strompfad der Batterie 8 legen kann. Werden in jedem Submodul 22 die Schalter 46, 50 in gleicher Weise abwechselnd geöffnet und geschlossen, ist gemeinsam mit der Induktivität 20 ein Hochsetzsteller geschaffen, der die Summe der Teilspannungen 24 höher setzt, als die Batteriespannung 16. Weiterhin kann durch die Eingangshalbbrücke 40 die Vollbrücke 42 auch dauerhaft aus der Reihenschaltung der drei Submodule 22 entfernt werden, wenn der zweite Schalter 50 dauerhaft geschlossen bleibt.

Die Vollbrücke 42 ist als Vierquadrantensteller ausgeführt, der eine erste Wechselrichterhalbbrücke 54 und eine zweite Wechselrichterhalbbrücke 56 aufweist. Beide Wechselrichterhalbbrücken 54, 56 sind analog zur Eingangshalbbrücke 40 aufgebaut, wobei jedoch zur Realisierung des Vierquadrantenstellers alle Freilaufdioden 48, 52 antiparallel zu den Schaltern 46, 50 geschaltet sind. Auf eine extra Referenzierung wird in FIG 2 der Übersichtlichkeit halber verzichtet. Die Teilspannung 24, die über den Zwischenkreiskondensator 44 stabilisiert wird, kann durch eine geeignete Ansteuerung der Vollbrücke 42 in eine Wechselspannung 58 umgewandelt werden. Die Wechselspannung 58 wird an die Last 10 angelegt und ruft einen entsprechenden Wechselstrom 60 durch die Last 10 hervor. Gibt die Last 10 elektrische Energie an die als Vierquadrantensteller ausgeführte Vollbrücke 42 ab, so kann diese den entsprechenden Leistungsfluss zurück in das Submodul 22 leiten.

Zur Ansteuerung der Vollbrücke 42 ist im Submodul 22 ein lokales Steuergerät, nachstehend Slave 62 genannt, vorgesehen. Der Slave 62 empfängt vom Master 34 über eine nicht gezeigte sichere elektrische Trennung das Stellsignal 36. Basierend auf dem Stellsignal 36 leitet der Slave 62 ein erstes Ansteuersignal 64 für den ersten Schalter 46 der ersten Wechselrichterhalbbrücke 54, ein zweites Ansteuersignal 66 für den zweiten Schalter 50 der ersten Wechselrichterhalbbrücke 54, ein drittes Ansteuersignal 68 für den ersten Schalter 46 der zweiten Wechselrichterhalbbrücke 56 und ein viertes Ansteuersignal 70 für den zweiten Schalter 50 der zweiten Wechselrichterhalbbrücke 56 ab, so dass die Wechselrichterhalbbrücken 54, 56 basierend auf dem Batteriestrom 18 einen Wechselstrom 60 durch die elektrische Last 10 mit bestimmten Eigenschaften wie Frequenz und Phasenlage ausgeben, wobei die Eigenschaften des Wechselstroms 60 durch das Stellsignal 36 veränderbar sind. Die Erzeugung der Ansteuersignale 64 bis 70 kann dabei durch eine offene Steuerung oder basierend auf einer Messung des Wechselstromes 60 durch eine geschlossene Regelung erfolgen.

Der Slave 62 kann ferner anhand einer am Zwischenkreiskondensator 44 abfallenden Spannung 71 einen Fehler im Submodul 22 erfassen. Der Zwischenkreiskondensator 44 ist zur Zwischenspeicherung von elektrischer Energie aus der elektrischen Last 10 aufgrund eines Blindleistungsflusses vorgesehen, die das Submodul 22 aufgrund der vorgegebenen Richtung des Batteriestromes 18 und der Batteriespannung 16 nicht verlassen kann. Der Blindleistungsfluss ist jedoch begrenzt, so dass auch die Zwischenkreiskondensatorspannung 71 begrenzt ist. Überschreitet diese einen bestimmten Wert, so ist dies demnach ein Hinweis auf einen fehlerhaften elektrischen Energiefluss durch das Submodul 22, da der Zwischenkreiskondensator 44 nun nicht mehr ausschließlich elektrische Energie aus dem Blindleistungsfluss sondern auch aus einem Wirkleistungsfluss speichert, was darauf hindeutet, dass eventuell eine Unterbrechung im Submodul vorliegen könnte. Unterschreitet die Zwischenkreiskondensatorspannung 71 hingegen einen weiteren kleineren vorbestimmten Wert, so ist dies ein Hinweis auf einen Kurzschluss zum Zwischenkreiskondensator 44.

In beiden Fällen kann der Slave 62 zur Sicherheit den Ausgang der Vollbrücke 42 von der Last 10 leistungstechnisch trennen und optional dazu den Eingang 26, 28 des Submoduls 22 kurzschließen, damit sich der Zwischenkreiskondensator 44 nicht unkontrolliert auflädt.

Dazu kann der Slave 62 den Ausgang der Vollbrücke 42 zunächst über einen ersten Sicherheitsschalter 72 kurzschließen, so dass am Ausgang der Vollbrücke 42 keine Wechselrichterspannung 58 mehr abfallen kann. Ist die Wechselrichterspannung 58 gleich Null, so kann die Vollbrücke 42 auch keine elektrische Leistung mehr aus der elektrischen Last 10 aufnehmen oder entsprechend abgeben. Folglich ist eine Aufladung des Zwischenkreiskondensators 44 durch die elektrische Last 10 wirksam unterbunden.

Um zu vermeiden, dass trotz des Kurzschlusses über den ersten Sicherheitsschalters 72 unkontrolliert Ströme in die Vollbrücke 42 eingeleitet und durch die Freilaufdioden 48, 52 gleichgerichtet werden, kann der Slave 62 zusätzlich einen zweiten Sicherheitsschalter 74 öffnen, der einen noch verbleibenden Stromkreis zwischen dem Zwischenkreiskondensator 44 und der elektrischen Last 10 unterbricht.

Schließlich kann der Slave 62 den Kurzschluss zusätzlich oder alternativ über die Vollbrücke 42 selbst herbeiführen. Dazu sind lediglich die ersten Schalter 46 der Wechselrichterhalbbrücken 54, 56 gemeinsam und/oder die ersten Schalter 50 der Wechselrichterhalbbrücken 54, 56 gemeinsam zu schließen. Ist die Vollbrücke 42 jedoch selbst von einem Fehler betroffen und kann diesen Kurzschluss nicht mehr wirkungsvoll herbeiführen, so stellen die beiden Sicherheitsschalter 72, 74 eine redundante Ressource zur Vermeidung einer Überbelastung des Zwischenkreiskondensators 44 dar.

Zusätzlich kann der Slave 62 auch den Eingang 26, 28 des Submoduls 22 kurzschließen. Dies verhindert, dass der Zwischenkreiskondensator 44 während des ausgangsseitigen Kurzschlusses durch die Batterie 8 zu stark aufgeladen und beschädigt wird. Der eingangsseitige Kurzschluss wird durch Schließen des zweiten Schalters 50 der Eingangshalbbrücke 40 erreicht.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Verfahren zum Schützen eines Zwischenkreiskondensators (44) in einer Stromrichterschaltung (4) mit wenigstens zwei Submodulen (22) in Reihenschaltung, die über eine Induktivität (20) elektrische Leistung aus einer eine Gleichspannung (16) abgebenden Leistungsquelle (8) bezieht, wobei jedes Submodul (22) eingangsseitig eine einphasige Halbbrücke (40) und lastseitig eine Vollbrücke (42) aufweist, und wobei die Halbbrücke (40), die Vollbrücke (42) und ein Zwischenkreiskondensator (44) gleichspannungsseitig miteinander parallel verschaltet sind, **gekennzeichnet durch** folgende Schritte:
- Erfassen eines Fehlers in einem der Submodule (22), und
- Blockieren einer elektrischen Leistungsübertragung vom lastseitigen Ausgang (30,32) der Vollbrücke (42) des Submoduls (22) mit dem erfassten Fehler in das Submodul (22) mit dem erfassten Fehler.

2. Verfahren nach Anspruch 1, **gekennzeichnet durch** den Schritt:
- Unterbrechen der elektrischen Verbindung zwischen einem lastseitigen Ausgang (30,32) der Vollbrücke (42) des fehlerhaften Submoduls (22) und dem Zwischenkreiskondensator (44) des fehlerhaften Submoduls (22) zum Trennen des lastseitigen Ausgangs (30,32) der Vollbrücke (42) des fehlerhaften Submoduls (22) vom Zwischenkreiskondensator (44) des fehlerhaften Submoduls (22).

3. Verfahren nach Anspruch 1 oder 2, gekennzeichn e t durch den Schritt:
- Kurzschließen des lastseitigen Ausgangs (30, 32) der Vollbrücke (42) des fehlerhaften Submoduls (22) zum Trennen des lastseitigen Ausgangs (30,32) der Vollbrücke (42) des fehlerhaften Submoduls (22) vom Zwischenkreiskondensator (44) des fehlerhaften Submoduls (22).

4. Verfahren nach Anspruch 3, **gekennzeichnet durch** den Schritt:
- Schließen zweier den lastseitigen Ausgang (30,32) der Vollbrücke (42) des fehlerhaften Submoduls (22) mit dem Zwischenkreiskondensator (44) des fehlerhaften Submoduls (22) verbindenden Schalter (46,50) der Vollbrücke (42) des fehlerhaften Submoduls (22) zum Kurzschließen des lastseitigen Ausgangs (30,32) der Vollbrücke (42) des fehlerhaften Submoduls (22).

5. Verfahren nach Anspruch 3 oder 4, **gekennzeichnet durch** den Schritt:
- Schließen eines parallel zum lastseitigen Ausgang (30, 32) der Vollbrücke (42) des fehlerhaften Submoduls (22) geschalteten Schalters (72) zum Kurzschließen des lastseitigen Ausgangs (30,32) der Vollbrücke (42) des fehlerhaften Submoduls (22).

6. Verfahren nach einem der vorstehenden Ansprüche, **gekennzeichnet durch** den Schritt:
- Trennen eines Eingangs (26,28) des fehlerhaften Submoduls (22) vom Zwischenkreiskondensator (44) des fehlerhaften Submoduls (22).

7. Verfahren nach Anspruch 6, **gekennzeichnet durch** den Schritt:
- Kurzschließen des Eingangs (26,28) des fehlerhaften Submoduls (22) zum Trennen des Eingangs (26,28) des fehlerhaften Submoduls (22) vom Zwischenkreiskondensator (44) des fehlerhaften Submoduls (22).

8. Verfahren nach einem der vorstehenden Ansprüche, **gekennzeichnet durch** den Schritt:
- Erfassen des Fehlers im Submodul (22), wenn eine am Zwischenkreiskondensator (44) des fehlerhaften Submoduls (22) abfallende Spannung (71) einen vorbestimmten Wert überschreitet.

9. Steuervorrichtung (62), bevorzugt mit einem Speicher und einem Prozessor, die zur Durchführung eines Verfahrens nach einem der vorstehenden Ansprüche eingerichtet ist.

10. Stromrichterschaltung (4), umfassend wenigstens zwei Submodule (22) in Reihenschaltung, die über eine Induktivität elektrische Leistung aus einer eine Gleichspannung abgebenden Leistungsquelle (8) bezieht,
- wobei jedes Submodul (22) eingangsseitig eine einphasige Halbbrücke (40) und lastseitig eine Vollbrücke (42) aufweist, und
- wobei die Halbbrücke (40), die Vollbrücke (42) und ein Zwischenkreiskondensator (44) gleichspannungsseitig miteinander parallel verschaltet sind, mit einer Steuervorrichtung (62) nach Anspruch 9.

11. Stromrichterschaltung (4) nach Anspruch 10, umfassend einen Schalter (74) in jedem Submodul (22), der am lastseitigen Ausgang (30,32) der Vollbrücke (42) in Reihe zur Vollbrücke (42) geschalten ist.

12. Stromrichterschaltung (4) nach Anspruch 10 oder 11, umfassend einen Schalter (72) in jedem Submodul (22), der am lastseitigen Ausgang (30,32) der Vollbrücke (42) parallel zur Vollbrücke (42) geschalten ist.

13. Elektromotor für ein Fahrzeug umfassend mehrere Motorwicklungen und eine Stromrichterschaltung (4) nach einem der Ansprüche 10 bis 12 mit einer der Anzahl der Motorwicklungen (10) entsprechenden Anzahl an Submodulen (22), wobei jedes Submodul (22) ausgangsseitig an eine Motorwicklung (10) angeschlossen ist.

## Claims

1. Method for protecting an intermediate circuit capacitor (44) in a power converter circuit (4) comprising at least two submodules (22) in a series circuit, which draws electrical power from a power source (8) outputting a DC voltage (16) by way of an inductance (20), wherein each submodule (22) has, on the input side, a single-phase half bridge (40) and, on the load side, a full bridge (42), and wherein the half bridge (40), the full bridge (42) and an intermediate circuit capacitor (44) are connected in parallel with one another on the DC voltage side, **characterised by** the following steps:
- detecting a fault in one of the submodules (22), and
- blocking an electrical power transmission from the load-side output (30, 32) of the full bridge (42) of the submodule (22) with the detected fault into the submodule (22) with the detected fault.

2. Method according to claim 1, **characterised by** the step:
- interrupting the electrical connection between a load-side output (30, 32) of the full bridge (42) of the faulty submodule (22) and the intermediate circuit capacitor (44) of the faulty submodule (22) in order to separate the load-side output (30,32) of the full bridge (42) of the faulty submodule (22) from the intermediate circuit capacitor (44) of the faulty submodule (22).

3. Method according to claim 1 or 2, **characterised by** the step:
- short-circuiting the load-side output (30, 32) of the full bridge (42) of the faulty submodule (22) in order to separate the load-side output (30, 32) of the full bridge (42) of the faulty submodule (22) from the intermediate circuit capacitor (44) of the faulty submodule (22).

4. Method according to claim 3, **characterised by** the step:
- closing two switches (46, 50) - which connect the load-side output (30, 32) of the full bridge (42) of the faulty submodule (22) with the intermediate circuit capacitor (44) of the faulty submodule (22) - of the full bridge (42) of the faulty submodule (22) in order to short-circuit the load-side output (30, 32) of the full bridge (42) of the faulty submodule (22).

5. Method according to claim 3 or 4, **characterised by** the step:
- closing a switch (72) connected in parallel with the load-side output (30, 32) of the full bridge (42) of the faulty submodule (22) in order to short-circuit the load-side output (30, 32) of the full bridge (42) of the faulty submodule (22).

6. Method according to one of the preceding claims, **characterised by** the step:
- separating an input (26, 28) of the faulty submodule (22) from the intermediate circuit capacitor (44) of the faulty submodule (22).

7. Method according to claim 6, **characterised by** the step:
- short-circuiting the input (26, 28) of the faulty submodule (22) in order to separate the input (26, 28) of the faulty submodule (22) from the intermediate circuit capacitor (44) of the faulty submodule (22).

8. Method according to one of the preceding claims, **characterised by** the step:
- detecting the fault in the submodule (22) when a voltage (71) dropping at the intermediate circuit capacitor (44) of the faulty submodule (22) exceeds a predetermined value.

9. Control device (62), preferably having a memory and a processor, which is provided for executing a method according to one of the preceding claims.

10. Power converter circuit (4), comprising at least two submodules (22) in a series circuit, which draws electrical power by way of an inductance from a power source (8) outputting a DC voltage,
- wherein each submodule (22) has, on the input side, a single-phase half bridge (40) and, on the load side, a full bridge (42), and
- wherein the half bridge (40), the full bridge (42) and an intermediate circuit capacitor (44) are connected in parallel with one another on the DC voltage side, having a control device (62) according to claim 9.

11. Power converter circuit (4) according to claim 10, comprising a switch (74) in each submodule (22), which is connected at the load-side output (30, 32) of the full bridge (42) in series with the full bridge (42).

12. Power converter circuit (4) according to claim 10 or 11, comprising a switch (72) in each submodule (22), which is connected at the load-side output (30, 32) of the full bridge (42) in parallel with the full bridge (42).

13. Electric motor for a vehicle comprising a plurality of motor windings and a power converter circuit (4) according to one of claims 10 to 12, having a number of submodules (22) corresponding to the number of motor windings (10), wherein each submodule (22) is connected on the output side to a motor winding (10).

## Revendications

1. Procédé de production d'un condensateur ( 44 ) de circuit intermédiaire dans un circuit ( 4 ) de convertisseur, comprenant au moins deux sous-modules ( 22 ) montés en série, qui reçoivent par une inductance ( 20 ) de la puissance électrique d'une source ( 8 ) de puissance cédant une tension ( 16 ) continue, chaque sous-module ( 22 ) ayant, du côté de l'entrée, un demi-pont ( 40 ) monophasé, et, du côté de la charge, un pont ( 42 ) complet et le demi-pont ( 40 ), le pont ( 42 ) complet et un condensateur ( 44 ) de circuit intermédiaire étant montés en parallèle entre eux du côté de la tension continue,
**caractérisé par** les stades suivants :
- détection d'un défaut dans l'un des sous-modules ( 22 ) et
- blocage d'une transmission de puissance électrique de la sortie ( 30, 32 ), du côté de la charge, du pont ( 42 ) complet du sous-module ( 22 ) par la détection du défaut dans le sous-module ( 22 ) ayant le défaut détecté.

2. Procédé suivant la revendication 1,
**caractérisé par** le stade :
- interruption de la liaison électrique entre une sortie ( 30, 32 ), du côté de la charge, du pont ( 42 ) complet du sous-module ( 22 ) défectueux et le condensateur ( 44 ) de circuit intermédiaire du sous-module ( 22 ) défectueux pour séparer la sortie ( 30, 32 ), du côté de la charge, du pont ( 42 ) complet du sous-module ( 22 ) défectueux du condensateur ( 44 ) de circuit intermédiaire du sous-module ( 22 ) défectueux.

3. Procédé suivant la revendication 1 ou 2,
**caractérisé par** le stade :
- court-circuitage de la sortie ( 30, 32 ) du côté de la charge du pont ( 42 ) complet du sous-module ( 22 ) défectueux pour séparer de la sortie ( 30, 32 ), du côté de la charge, du pont ( 42 ) complet du sous-module ( 22 ) défectueux du condensateur ( 44 ) de circuit intermédiaire du sous-module ( 22 ) défectueux.

4. Procédé suivant la revendication 3,
**caractérisé par** le stade :
- fermeture de deux interrupteurs ( 46, 50 ) du pont ( 42 ) complet du sous-module ( 22 ) défectueux, reliant la sortie ( 30, 32 ), du côté de la charge, du pont complet ( 42 ) du sous-module ( 22 ) défectueux au condensateur ( 44 ) de circuit intermédiaire du sous-module ( 22 ) défectueux, pour court-circuiter la sortie ( 30, 32 ), du côté de la charge, du pont ( 42 ) complet du sous-module ( 22 ) défectueux.

5. Procédé suivant la revendication 3 ou 4,
**caractérisé par** le stade :
- fermeture d'un interrupteur ( 72 ) monté en parallèle à la sortie ( 30, 32 ) du côté de la charge du pont ( 42 ) complet du sous-module ( 22 ) défectueux, pour court-circuiter la sortie ( 30, 32 ), du côté de la charge, du pont ( 42 ) complet du sous-module ( 22 ) défectueux.

6. Procédé suivant l'une des revendications précédentes,
**caractérisé par** le stade :
- séparation d'une entrée ( 26, 28 ) du sous-module ( 22 ) défectueux du condensateur ( 44 ) de circuit intermédiaire du sous-module ( 22 ) défectueux.

7. Procédé suivant la revendication 6,
**caractérisé par** le stade :
- court-circuitage de l'entrée ( 26, 28 ) du sous-module ( 22 ) défectueux, pour séparer l'entrée ( 26, 28 ) du sous-module ( 22 ) défectueux du condensateur ( 44 ) de circuit intermédiaire du sous-module ( 22 ) défectueux.

8. Procédé suivant l'une des revendications précédentes,
**caractérisé par** le stade :
- détection du défaut du sous-module ( 22 ) si une tension ( 71 ) chutant aux bornes du condensateur ( 44 ) de circuit intermédiaire du sous-module ( 22 ) défectueux dépasse une valeur définie à l'avance.

9. Dispositif ( 62 ) de commande, ayant de préférence une mémoire et un processeur, qui est conçu pour effectuer un procédé suivant l'une des revendications précédentes.

10. Circuit ( 4 ) de convertisseur, comprenant au moins deux sous-modules ( 22 ) montés en série, qui reçoivent par une inductance de la puissance électrique d'une source ( 8 ) de puissance cédant une tension continue,
- dans lequel chaque sous-module ( 22 ) a, du côté de l'entrée, un demi-pont ( 40 ) monophasé et, du côté de la charge, un pont ( 42 ) complet et
- le demi-pont ( 40 ), le pont ( 42 ) complet et un condensateur ( 44 ) de circuit intermédiaire sont montés en parallèle entre eux du côté de la tension continue, comprenant un dispositif ( 62 ) de commande suivant la revendication 9.

11. Circuit ( 4 ) de convertisseur 12 suivant la revendication 10, comprenant un interrupteur ( 74 ) dans chaque sous-module ( 22 ) qui est monté à la sortie ( 30, 32 ), du côté de la charge, du pont ( 42 ) complet en série avec le pont ( 42 ) complet.

12. Circuit ( 4 ) de convertisseur 12 suivant la revendication 10 ou 11, comprenant un interrupteur ( 72 ) dans chaque sous-module ( 22 ) qui est monté à la sortie ( 30, 32 ), du côté de la charge, du pont ( 42 ) complet en parallèle avec le pont ( 42 ) complet.

13. Moteur électrique pour un véhicule comprenant plusieurs enroulement de moteur et un circuit ( 4 ) de convertisseur suivant l'une des revendications 10 à 12 ayant un nombre de sous-modules ( 22 ) correspondant au nombre des enroulements ( 10 ) de moteur, chaque sous-module ( 22 ) étant raccordé, du côté de la sortie, à un enroulement ( 10 ) de moteur.
